(19) Europäisches Patentamt
European Patent Office
Office européen des brevets

(11) Publication number: **0 516 298 A1**

(12) **EUROPEAN PATENT APPLICATION**

(21) Application number: **92304085.1**

(22) Date of filing: **06.05.92**

(51) Int. Cl.[5]: **C09B 62/085**, C09B 62/51, D06P 1/38

(30) Priority: **28.05.91 GB 9111427**

(43) Date of publication of application: **02.12.92 Bulletin 92/49**

(84) Designated Contracting States: **AT BE CH DE ES FR GB IT LI NL PT**

(71) Applicant: **IMPERIAL CHEMICAL INDUSTRIES PLC**
**Imperial Chemical House, Millbank**
**London SW1P 3JF(GB)**

(72) Inventor: **Anderton, Kenneth**
**69 Bankhouse Road**
**Bury, Lancashire, BL8 1DY(GB)**

(74) Representative: **Pugsley, Roger Graham et al**
**ICI Group Patents Services Dept. PO Box 6**
**Shire Park Bessemer Road**
**Welwyn Garden City Herts, AL7 1HD(GB)**

(54) **Reactive dyes.**

(57) A compound of the Formula (1) or salt thereof:

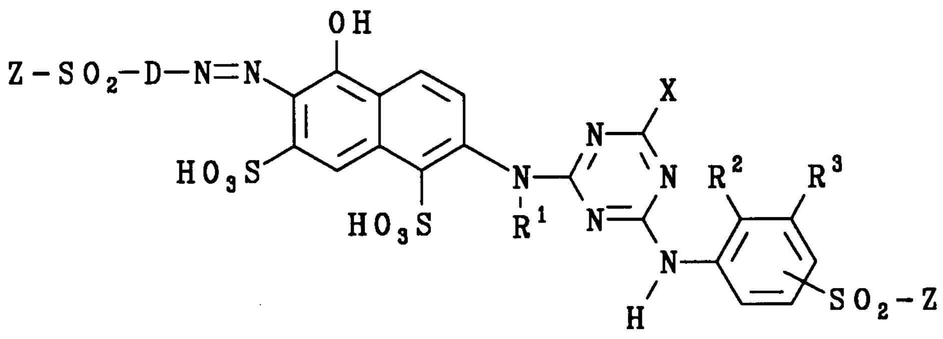

(1)

wherein:

| | |
|---|---|
| Z | is vinyl, or a group which is convertible to vinyl by treatment with aqueous alkali; |
| D | is optionally substituted phenylene or naphthylene; |
| $R^1$ | is H, alkyl or substituted alkyl; |
| $R^2$ and $R^3$ | are each independently H, $C_{1-4}$-alkyl or $C_{1-4}$-alkoxy; and |
| X | is halo or quaternary ammonium. |

EP 0 516 298 A1

The present invention relates to reactive dyes, to a process for their preparation, to a process for the coloration of materials using the dyes, and to materials dyed with the dyes.

According to the present invention there is provided a compound of the Formula (1) or salt thereof:

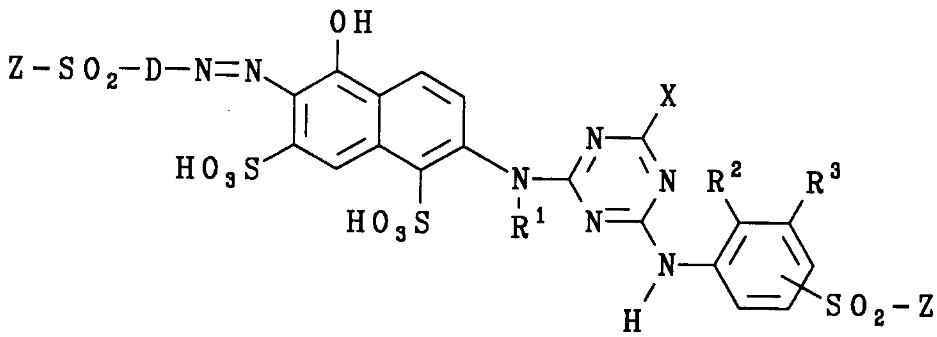

(1)

wherein:

| | |
|---|---|
| Z | is vinyl, or a group which is convertible to vinyl by treatment with aqueous alkali; |
| D | is optionally substituted phenylene or naphthylene; |
| $R^1$ | is H, alkyl or substituted alkyl; |
| $R^2$ and $R^3$ | are each independently H, $C_{1-4}$-alkyl or $C_{1-4}$-alkoxy; and |
| X | is halo or quaternary ammonium. |

Examples of groups which are convertible to vinyl by treatment with aqueous alkali include $-CH_2CH_2OSO_3H$, $-CH_2CH_2SSO_3H$, $-CH_2CH_2Cl$ and $-CH_2CH_2OCOCH_3$. It is preferred that Z is vinyl or $-CH_2CH_2OSO_3H$.

It is preferred that the group represented by D is unsubstituted, or has 1 or 2 substituents, and the substituents are preferably independently selected from $C_{1-4}$-alkyl, especially methyl; $C_{1-4}$-alkoxy, especially methoxy; $-SO_3H$; $-CO_2H$; and halo, especially chloro. It is most preferred that D is optionally substituted phenylene, especially unsubstituted phenylene.

When D is optionally substituted phenylene it is preferred that the two groups shown attached to D in Formula (1) are meta or para with respect to one another.

In a preferred dye the group of formula $-SO_2Z$ shown on the right hand side of Formula (1) is para with respect to the -HN- group.

$R^1$ is preferably H, $C_{1-4}$-alkyl or substituted $C_{1-4}$-alkyl. When $R^1$ is substituted $C_{1-4}$-alkyl it is preferable that each substituent is independently selected from $-C_{1-4}$-alkoxy, especially methoxy; $-SO_3H$; $-CO_2H$; halo, especially chloro; hydroxy and amino. It is, however, preferred that $R^1$ is H or methyl.

It is preferred that one or both of $R^2$ and $R^3$ is H.

X is preferably F, Cl, Br or a quaternary ammonium group. A preferred quaternary ammonium group is tri($C_{1-4}$-alkyl)ammonium, e.g. $(CH_3)_3N^{+}$-, or an optionally substituted pyridinium group, especially 3-carboxypyridinium or 4-carboxypyridinium. It is particularly preferred that X is F or Cl.

A preferred compound falling within the scope of the present invention is of Formula (2):

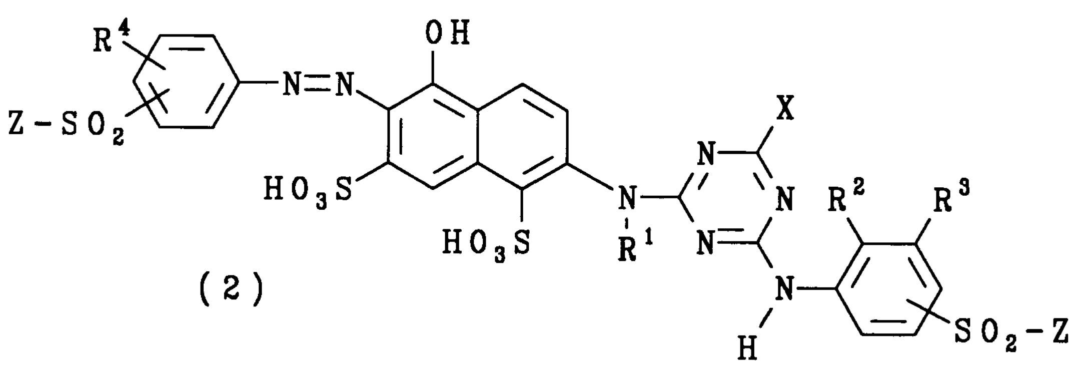

(2)

wherein $R^1$, $R^2$, $R^3$, X and Z are as hereinbefore defined, and $R^4$ is H, $C_{1-4}$-alkyl or $C_{1-4}$-alkoxy. It is

preferred that $R^4$ is methyl, methoxy or H, especially H.

The groups represented by $-SO_2-Z$ are preferably meta or para with respect to the azo group or -NH-group attached to the same ring, more preferably para for reasons of solubility, build up or stability to variations of batching time or temperature.

A compound of Formula (1) may be prepared by a process comprising the condensation of a compound of Formula (4) with a compound of Formula (3):

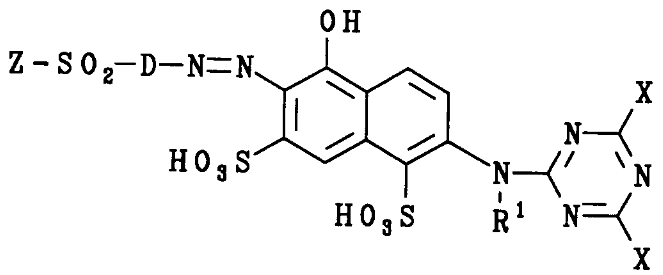

(3)

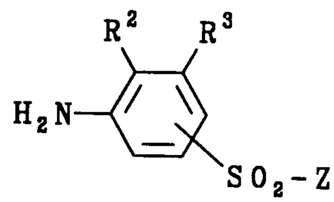

(4)

wherein:

| | |
|---|---|
| Z, D, $R^1$, $R^2$ and $R^3$ | are as hereinbefore defined; and |
| X | is halo. |

A compound wherein X is quaternary ammonium may be prepared by reacting the product of the condensation with an appropriate amine.

It is preferred that the condensation is performed in the presence of base, for example an alkali earth metal hydroxide, carbonate or bicarbonate. Preferably the condensation is performed in water or an aqueous solvent, especially at a temperature of 10-60 °C.

The compound of Formula (3) may be prepared by forming a diazonium salt of a compound of formula $Z-SO_2-D-NH_2$, preferably using $NaHO_2$ at below 5 °C, and coupling under acidic conditions with a compound of Formula (5):

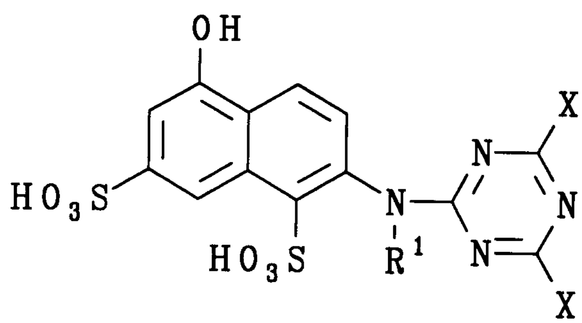

(5)

wherein:

| | |
|---|---|
| $R^1$, Z and D | are as hereinbefore defined; and |
| X | is halo. |

The compound of Formula (5) may be prepared by condensing a cyanuric halide with an appropriate naphthylamine.

A compound of Formula (1) in which $-SO_2Z$ is para with respect to the -N=H- group, that is to say D is a 1,4-phenylene group, is particularly preferred, especially in view of the good build up and fastness properties demonstrated by cotton dyed with such a dye in standard ISO water and ISO 3 tests. Orange dyes of the present invention, especially those having an absorbtion maxima at a wavelength from 475-485nm, more especially 476-481nm, are particularly preferred due to their combination of good dyeing properties and attractive orange shade. The compounds wherein $R^2$ and $R^3$ are both H are also preferred for the ease with which they may be prepared relative to compounds where $R^2$ or $R^3$ is other than H.

A further feature of the present invention provides a composition comprising an inert carrier and a compound of Formula (1) or salt thereof, preferably in a weight ratio of 1:99 to 99:1, more preferably 50:1 to

1:50, especially 20:1 to 1:20, more especially 1:1 to 1:10. The inert carrier preferably comprises inorganic salts and/or a de-dusting agent. Examples of inorganic salts include earth and alkali earth metal halides, carbonates, bicarbonates, nitrates and mixtures thereof. Dodecyl benzene may be used as de-dusting agent.

Although compounds are shown in their free acid form in this specification it is intended that the present invention includes their salts, particularly their salts with an alkali metal, for example with lithium, sodium, potassium or a mixture thereof.

According to a further aspect of the present invention there is provided a process for coloration of a material having -OH and/or -NH- groups comprising applying thereto a compound of Formula (1).

The -OH group-containing materials include natural and synthetic hydroxyl group-containing materials, especially cellulosic textile materials and regenerated products thereof. Examples of the cellulosic textile materials include cotton and other vegetable fibres for example linen, hemp, jute, flax and ramie fibres. Examples of the regenerated cellulosic textile materials include viscose staple, filament viscose and TENCEL available from Courtaulds.

The -NH- group-containing materials include synthetic and natural polyamides and polyurethanes. Examples of such materials include wool and other animal furs, silk, leather, nylon-6,6 and nylon-6.

The coloration may be carried out in any suitable manner depending on the physical and chemical properties of the materials to be colored. For example, cellulosic materials can be colored using the compound of Formula (1) by exhaust dyeing, by padding, including cold pad-batch dyeing, or by printing. A particularly useful feature of a dye according to the invention is its utility in both exhaust and pad batch dyeing.

The exhaust dyeing is preferably carried out in the presence of an acid binding agent such as sodium carbonate, trisodium phosphate or sodium hydroxide, optionally using a neutral salt such as sodium sulphate or sodium chloride, together with a hydrotropic agent, a penetrant or a level dyeing agent. The neutral salt suitable for promoting the exhaustion may be added to a dye bath before, during or after reaching the desired temperature for dyeing.

The padding can be carried out by padding the cellulosic textile materials at ambient temperature or an elevated temperature, and drying, steaming or dry-heating the materials to perform the dye-fixation.

The cold pad batch dyeing can be carried out by padding the cellulosic textile materials with a padding liquor at ambient temperature and allowing them to stand on a frame, preferably for 3 hours or more, or overnight, followed by washing with water and drying.

An example of dyeing by pad-batch would be to dissolve around 25 parts of a dye of Formula (1) in hot water (1000 parts) and cool to 25 °C. Aqueous NaOH solution (e.g. 5.5 parts of 32.5% solution) and 50 ° Be water glass (ca. 150 parts) is then added to give a mixture. Cloth is then padded with the mixture, batched up, wrapped tightly with a polyethylene film and allowed to stand at above 5 °C for around 20 hours. Thereafter the cloth is washed with water, boil-soaped with a detergent, washed again with water and dried to give dyed cloth.

The printing can be carried out in a one-phase or two-phase manner. The one-phase printing may be conducted by printing the fibre materials with a printing paste containing an acid binding agent such as sodium hydrogencarbonate, sodium carbonate or the like, followed by steaming at a temperature of 100 ° to 160 °C. The two-phase printing may be conducted by printing the fibre materials with a neutral or weakly acidic printing paste, and passing the materials through a hot alkaline bath containing an electrolyte or over-padding the materials with an alkaline padding liquor containing an electrolyte, followed by a steaming or dry-heating treatment.

For the preparation of the printing paste, a paste or emulsifier such as sodium alginate, starch/ether or the like may be used, and if desired, together with a conventional auxiliary agent such as urea and/or dispersing agent.

The acid binding agent used for fixing the compound of the present invention to the cellulosic textile materials include water-soluble basic salts of alkali or alkaline earth metals with inorganic or organic acids or compounds capable of liberating alkalis under heating conditions. The preferred acid binding agents are alkali metal hydroxides and alkali metal salts of inorganic or organic acids having a weak or medium strength. Particularly preferred are sodium salts and potassium salts. Examples of acid binding agents include sodium hydroxide, potassium hydroxide, sodium bicarbonate, sodium carbonate, sodium formate, potassium carbonate, sodium dihydrogenphosphate, disodium hydrogenphosphate, trisodium phosphate, sodium silicate and sodium trichloroacetate.

The dyeing of natural or synthetic polyamide and polyurethane fibre materials can be carried out by exhaust dyeing in an acid or weakly acidic bath whilst controlling the pH, and then making the bath neutral, or in some cases alkaline to perform the fixation. The dyeing temperature is preferably in the range of 60 °

to 120°C, optionally in the presence of a conventional level dyeing agent.

According to a further aspect of the present invention there is provided a material, especially a textile material or material having -OH and/or -NH- groups, colored by reaction with a compound of Formula (1).

The present invention is illustrated by, but not limited to, the following Examples in which all parts and percentages are by weight, unless otherwise stated.

Example 1

Preparation of the compound of Formula (6) wherein $V^1$ and $V^2$ are both $-SO_2CH_2CH_2OSO_3H$, and both $V^1$ and $V^2$ are at the 4-position.

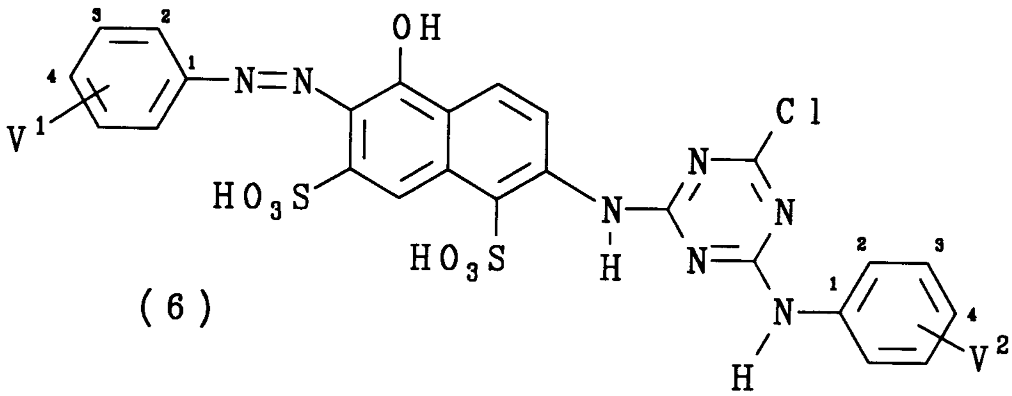

(6)

2N sodium hydroxide was added to a stirred suspension of 6-amino-1-hydroxynaphthalene-3,5-disulphonic acid (128 parts) in water (1000 parts) until a complete solution of approximately pH 6.0 was obtained. This solution was added to a stirred suspension obtained by gradual addition of a solution of cyanuric chloride (81 parts) in acetone (1000 parts by volume) to ice-water (2000 parts) at 0-5°C. The resultant mixture was stirred for a further 1.5 hours at 0-5°C to give a solution of a coupling component.

4-(beta-sulphatoethylsulphonyl)aniline (118 parts) was diazotised by stirring in water (1000 parts) at 0-5°C, adding aqueous hydrochloric acid (34.5% strength, 210 parts by volume) followed by 2N sodium nitrite (220 parts by volume). The mixture was stirred for 30 minutes at 0-5°C before destroying excess of nitrous acid by addition of sulphamic acid. The resultant diazonium salt suspension was added to the above coupling component solution, the pH raised to 6-7 by addition of sodium carbonate, and the mixture stirred for a further 2 hours at 0-5°C. The resultant azo product was precipitated by salting with potassium chloride, isolated by filtration and dried.

The above dry azo product (136 parts) and 4-(beta-sulphatoethylsulphonyl)aniline (62 parts) were stirred in water (1000 parts) at 25-30°C for 2 hours, during which the pH was maintained at 6-7 by addition of sodium carbonate as required. The product was isolated from the resultant mixture by salting with potassium chloride and the precipitate filtered off and dried to give the alkali metal salt of the title compound (lambda max 478nm), 496 parts at 53% strength calculated as free sulphonic acid.

When applied to cotton by pad batch dyeing the title compound showed good build up, allowing heavy depths of shade to be achieved. Cotton dyed with the title compound showed good fastness in ISO water and ISO 3 fastness tests.

Example 2

Preparation of the compound of Formula (6) wherein $V^1$ and $V^2$ are both $-SO_2CH_2CH_2OSO_3H$, $V^1$ is at the 3-position and $V^2$ is at the 4-position.

The method of Example 1 was followed except that instead of diazotising 4-(beta-sulphatoethylsulphonyl)aniline there was diazotised 3-(beta-sulphatoethylsulphonyl)aniline to give 351 parts of the title product (53% strength calculated as free sulphonic acid) having a lambda max at 480nm.

Example 3

Preparation of the compound of Formula (6) wherein $V^1$ and $V^2$ are both $-SO_2CH_2CH_2OSO_3H$, $V^1$ is at the 4-position and $V^2$ is at the 3-position.

The method of Example 1 was followed except that said dry azo product was condensed with 3-(beta-sulphatoethylsulphonyl)aniline instead of 4-(beta-sulphatoethylsulphony) aniline to give 535 parts of the title product (55% strength calculated as free sulphonic acid) having a lambda max at 480nm.

Example 4

Preparation of the compound of Formula (6) wherein $V^1$ and $V^2$ are both $-SO_2CH_2CH_2OSO_3H$, $V^1$ and $V^2$ are both at the 3-position.

The method of Example 1 was followed except that in place of 4–(betasulphatoethylsulphonyl)aniline there was used equivalent amounts of 3-(beta-sulphatoethylsulphonyl)aniline to give 436 parts of the title product (43% strength calculated as free sulphonic acid) having a lambda max at 478nm.

**Claims**

**1.** A compound of the Formula (1) or salt thereof:

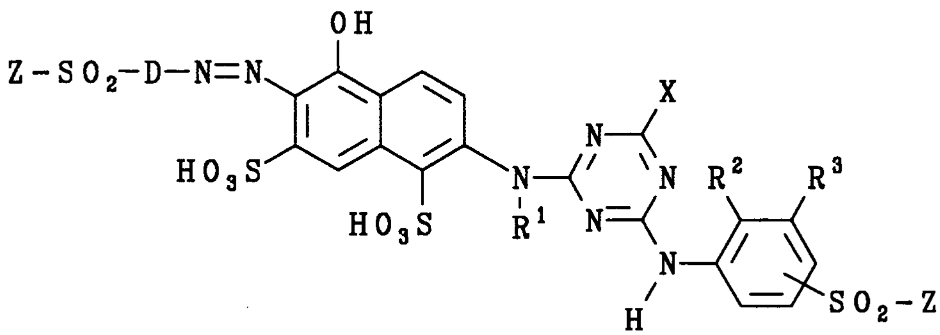

(1)

wherein:

| | |
|---|---|
| Z | is vinyl, or a group which is convertible to vinyl by treatment with aqueous alkali; |
| D | is optionally substituted phenylene or naphthylene; |
| $R^1$ | is H, alkyl or substituted alkyl; |
| $R^2$ and $R^3$ | are each independently H, $C_{1-4}$-alkyl or $C_{1-4}$-alkoxy; and |
| X | is halo or quaternary ammonium. |

**2.** A compound according to Claim 1 wherein D is optionally substituted phenylene.

**3.** A compound according to any one of the preceding claims wherein the groups represented by $SO_2$-Z are para with respect to the azo group or -NH- group attached to the same ring.

**4.** A compound according to any one of the preceding claims wherein X is F or Cl.

**5.** An orange compound according to any one of the preceding claims.

**6.** A compound of Formula (6) or salt thereof:

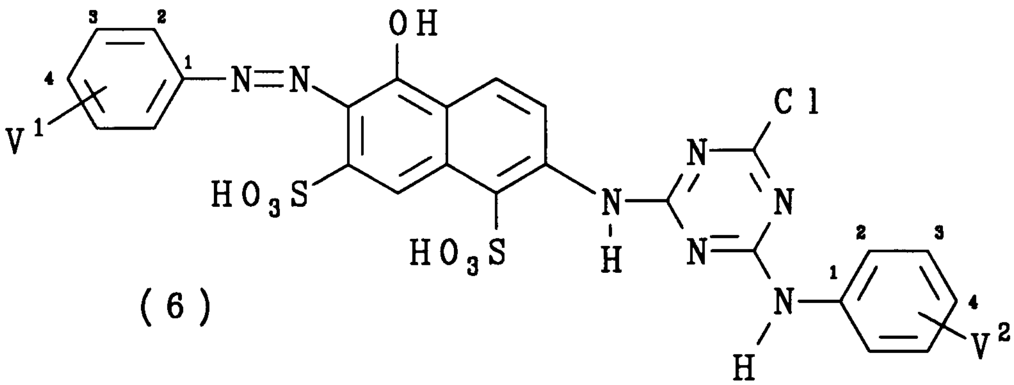

(6)

wherein:

$V^1$ and $V^2$ are both $-SO_2CH_2CH_2OSO_3H$ or $-SO_2CH=CH_2$; and
(i) both $V^1$ and $V^2$ are at the 4-position; or
(ii) $V^1$ is at the 3-position and $V^2$ is at the 4-position; or
(iii) $V^1$ is at the 4-position and $V^2$ is at the 3-position; or
(iv) both $V^1$ and $V^2$ are at the 3-position.

**7.** A compound according to Claim 6 wherein both $V^1$ and $V^2$ are at the 4-position.

**8.** A composition comprising a compound according to any one of the preceding claims and an inert carrier, wherein the inert carrier comprises inorganic salts and/or a de-dusting agent.

**9.** A process for the preparation of a compound according to Claim 1 comprising the condensation of a compound of Formula (4) with a compound of Formula (3):

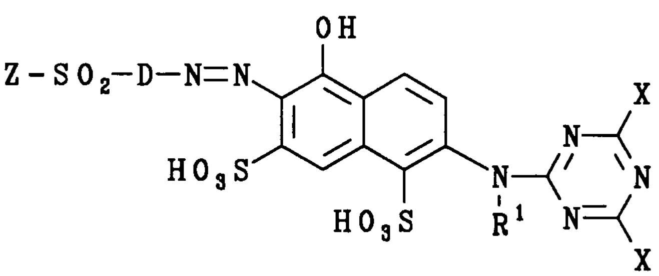

(3)

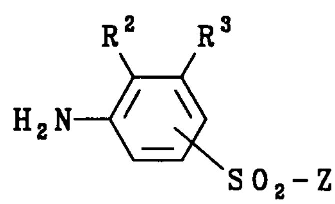

(4)

wherein:

Z, D, $R^1$, $R^2$ and $R^3$ are as defined in Claim 1; and
X is halo.

**10.** A process for the coloration of a material having -OH and/or -NH- groups comprising applying thereto a compound according to any one of Claims 1 to 7 or a composition according to Claim 8.

**Claims for the following Contracting States : ES, PT**

**1.** A composition comprising an inert carrier and a compound of the Formula (1) or salt thereof:

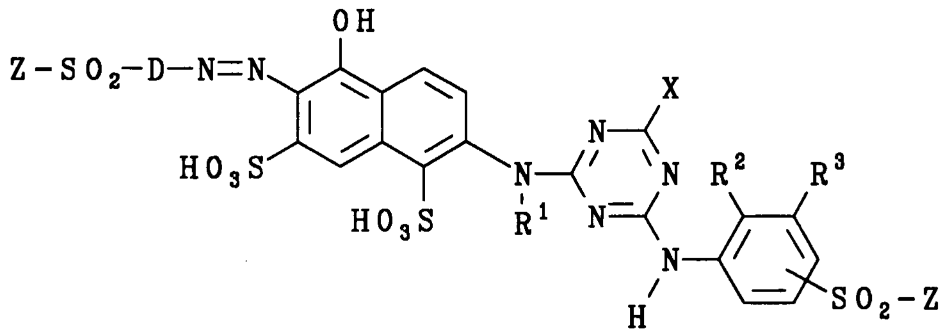

(1)

wherein:

| | |
|---|---|
| Z | is vinyl, or a group which is convertible to vinyl by treatment with aqueous alkali; |
| D | is optionally substituted phenylene or naphthylene; |
| $R^1$ | is H, alkyl or substituted alkyl; |
| $R^2$ and $R^3$ | are each independently H, $C_{1-4}$-alkyl or $C_{1-4}$-alkoxy; and |
| X | is halo or quaternary ammonium. |

2. A composition according to Claim 1 wherein D is optionally substituted phenylene.

3. A composition according to any one of the preceding claims wherein the groups represented by $SO_2$-Z are para with respect to the azo group or -NH- group attached to the same ring.

4. A composition according to any one of the preceding claims wherein X is F or Cl.

5. An orange composition according to any one of the preceding claims.

6. A composition comprising an inert carrier and compound of Formula (6) or salt thereof:

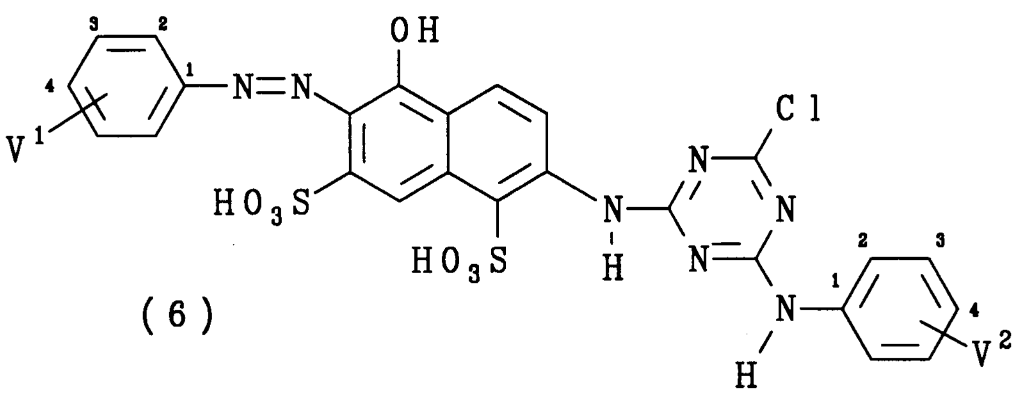

(6)

wherein:

$V^1$ and $V^2$ are both $-SO_2CH_2CH_2OSO_3H$ or $-SO_2CH=CH_2$; and
(i) both $V^1$ and $V^2$ are at the 4-position; or
(ii) $V^1$ is at the 3-position and $V^2$ is at the 4-position; or
(iii) $V^1$ is at the 4-position and $V^2$ is at the 3-position; or
(iv) both $V^1$ and $V^2$ are at the 3-position.

7. A composition according to Claim 6 wherein both $V^1$ and $V^2$ are at the 4-position.

8. A composition according to any one of the preceding claims wherein the inert carrier comprises inorganic salts and a de-dusting agent.

9. A process for the preparation of a compound of Formula (1), as defined in Claim 1, comprising the

condensation of a compound of Formula (4) with a compound of Formula (3):

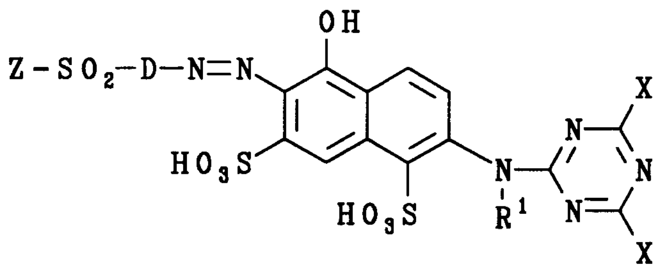

(3)

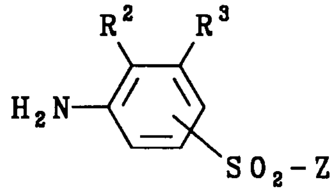

(4)

wherein:

| | |
|---|---|
| Z, D, $R^1$, $R^2$ and $R^3$ | are as defined in Claim 1; and |
| X | is halo. |

**10.** A process for the coloration of a material having -OH and/or -NH- groups comprising applying thereto a compound defined in any one of Claims 1 to 8.

European Patent Office

# EUROPEAN SEARCH REPORT

Application Number

EP 92 30 4085

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| A | EP-A-0 094 055 (HOECHST)<br>* Claim 1 *<br>--- | 1-10 | C 09 B 62/085<br>C 09 B 62/51<br>D 06 P 1/38 |
| A | EP-A-0 052 985 (SUMITOMO)<br>* Claims 1,3,4,10,11,12,13 *<br>--- | 1-10 | |
| A | DE-A-3 204 259 (HOECHST)<br>* Examples 32,33 *<br>--- | 1-10 | |
| A | EP-A-0 279 351 (HOECHST)<br>* Claim 1 *<br>----- | 1-10 | |

TECHNICAL FIELDS SEARCHED (Int. Cl.5)

C 09 B

The present search report has been drawn up for all claims

| Place of search | Date of completion of the search | Examiner |
|---|---|---|
| THE HAGUE | 06-07-1992 | GINESTET M.E.J. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document